# EUROPEAN PATENT APPLICATION

(11) **EP 3 892 973 A2**
(43) Date of publication of application: **13.10.2021**
(21) Application number: 21163290.6
(22) Date of filing: 17.03.2021
(51) Int. Cl.: G01L 1/12, G01H 11/02, G01H 17/00

(54) **FORCE SENSOR**

(30) Priority: 18.03.2020 GB 202003915
(71) Applicant: Thales Holdings UK Plc, Reading, Berkshire RG2 6GF (GB)
(72) Inventor: BOND, Andrew, Reading, Berkshire RG2 6GF (GB); BROWN, Leighton, Reading, Berkshire RG2 6GF (GB)
(74) Representative: Sibley, Lara Ann

(57) **Abstract**

The present disclosure relates to sensors for sensing an external force such as an acoustic wave. The sensor comprises a magnetometer 101 positioned proximate to a magnet 103 and configured to sense a magnetic field associated with the magnetic 103. Exposure of the sensor to the external force will cause one of the magnetic 103 and magnetometer 101 to move relative to the other such that the magnetometer 101 detects a change in the sensed magnetic field resulting from the relative motion of the magnetic 103 and the magnetometer, thereby detecting the presence of the force on the sensor.

## Description

### FIELD

The present disclosure relates to sensors for sensing an external force acting on the sensor. The present disclosure relates in particular, but non-exclusively, to sensors for use in sensing mechanical vibrations such as acoustic waves.

### BACKGROUND

Sensors are used in many industries to sense external forces and/or vibrations. For example, acoustic sensors include microphones for detecting acoustic waves travelling in air, and hydrophones for detecting acoustic waves travelling in water. Accelerometers sense mechanical vibrations and use them to measure the acceleration of a vibrating body.

Typically, such sensors use piezoelectric materials to sense the external force or vibrations by transforming a mechanical stress or strain brought about by the action of the force into an electrical signal, thereby providing useful information about the force or vibration. However, available piezoelectric materials have a limited sensitivity range and many require regular calibration.

### SUMMARY

According to a first aspect of the present invention, there is provided a sensor for sensing an external force acting on the sensor, the sensor comprising:
a magnetic element,
a magnetometer arranged proximate to the magnet and configured to sense a magnetic field associated with the magnetic element,
the magnetic element and the magnetometer being arranged such that exposure of the sensor to the external force will cause a first one of the magnetic element and magnetometer to move relative to the other,
the magnetometer being configured to detect a change in the sensed magnetic field resulting from the relative motion of the magnetic element and the magnetometer, thereby to detect the presence of the force on the sensor.

The sensor may comprise a body member arranged to receive an impact of the external force, wherein a first one of the magnetic element and the magnetometer are coupled to the body member, such that impact of the force on the body member will cause the first one of the magnetic element and magnetometer to move relative to the other.

The magnetometer may be a quantum magnetometer, wherein the quantum magnetometer comprises a gas cell containing a gas, wherein the gas is held in a known quantum state.

The magnetic element may be arranged proximate to the quantum magnetometer, such that relative motion of the magnetic element and the gas cell will disturb the quantum state of the gas. The magnetic element and the gas cell may be arranged such that exposure of the sensor to the external force will cause a first one of the magnetic element and gas cell to move relative to the other. The quantum magnetometer may comprise a detector configured to detect a change in the quantum state of the gas resulting from the relative motion of the magnetic element and gas cell, thereby to detect the presence of the force on the sensor.

The magnetic element may be arranged to disturb the quantum state of the gas by causing a change in the Larmor frequency of particles within the gas.

The magnetic element may be arranged such that the particles contained within the gas cell are exposed to the region of the magnetic field of the magnetic element that has the highest magnetic flux gradient.

The magnetic element may comprise a bi-polar magnet and the magnetic element may be arranged with one of its poles proximate to the magnetometer.

The magnetic element may be fixed to the body member at one end to form a cantilever.

The magnetic element may be at least partially embedded in a medium. The medium may be a flexible medium.

The magnetic element may comprise a plurality of magnetic particles embedded in the medium. The magnetic element may be arranged to surround all or part of the magnetometer.

The magnetic element may be a hollow cylindrical magnet.

The sensor may comprise a housing in which are contained the magnetic element and magnetometer, wherein at least one of the magnetic element and the magnetometer may be mounted within the housing such that exposure of the housing to the external force will cause the first one of the magnetic element and magnetometer to move relative to the other.

The magnetic element and the gas cell may be mounted to the wall(s) of the housing such that motion of the housing will cause the magnetic element and gas cell to move relative to one another.

The sensor may be for sensing acoustic waves.

According to a second aspect of the present invention, there is provided a microphone comprising a sensor according to the first aspect of the present invention.

According to a third aspect of the present invention, there is a sonar receiver comprising a sensor according to the first aspect of the present invention.

According to a fourth aspect of the present invention, there is provided an accelerometer comprising a sensor according to the first aspect of the present invention.

### BRIEF DESCRIPTION OF THE DRAWINGS:

Embodiments of the invention will now be described by way of example with reference to the accompanying drawings in which:
Fig. 1 shows components of a sensor according to an embodiment;
Fig. 2 shows components of a sensor according to an embodiment;
Fig. 3 shows a bar magnet for use in a sensor according to an embodiment;
Fig. 4 shows an example of how a shift in position of the body member of the sensor results in a change in the magnetic field experienced by particles in the gas cell of the sensor;
Fig. 5 shows how the magnetic field strength varies across the end face of the bar magnet of Fig. 3;
Fig. 6 shows how the gradient of the magnetic field varies across the end face of the bar magnet of Fig. 3;
Fig. 7 shows components of a sensor according to a further embodiment;
Fig. 8 shows components of a sensor according to a further embodiment;
Fig. 9 shows components of a sensor according to a further embodiment; and
Fig. 10 shows components of a sensor according to a further embodiment;

### DETAILED DESCRIPTION

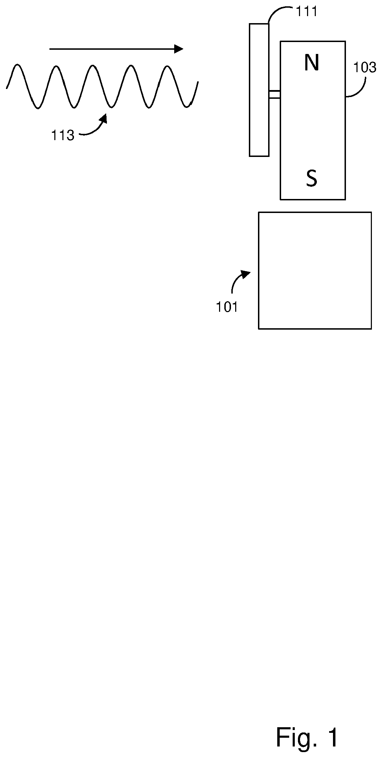

Fig. 1 depicts an example of a sensor according to an embodiment. The sensor is used to sense an external force or disturbance 113, such as an acoustic wave, a strain, static pressure or other mechanical wave that might be emitted by a remote source. The sensor comprises a magnetometer 101 and a magnetic element 103. The magnetometer 101 may be one of a fluxgate magnetometer, a Hall effect magnetometer, a MEMS magnetometer or a quantum magnetometer (it will be appreciated that other suitable magnetometers may also be used). The magnetic element 103 is positioned proximate to the magnetometer 101 such that the magnetometer 101 is exposed to the magnetic field of the magnetic element 103.

Upon exposure of the sensor to the external disturbance, the magnetic element 103 is caused to move relative to the magnetometer (or vice versa). As the magnetic element 103 moves relative to the magnetometer 101, so the magnetic field sensed by the magnetometer 101 will change; this change in the sensed magnetic field can in turn be used to infer the presence of the force or disturbance.

The sensor further comprises a body member 111 that is arranged to receive the impact of the external force. The body member 111 may be any structural element that is capable of undergoing movement or deformation in response to the force. In some embodiments, the body member 111 is a rigid member arranged to transmit the force to one or other of the magnetic element 103 and magnetometer 101, so as to stimulate relative motion between the magnetic element 103 and the magnetometer 101.

Embodiments described herein can provide sensors with higher sensitivities than the range offered by available piezoelectric materials. In defence applications, for example, hydrophones are conventionally used to detect acoustic waves from submarines and vessels and provide information about their presence and/or position. However, significant advances in technology have resulted in quieter submarines and vessels, rendering them increasingly difficult to detect. Furthermore, sensors are increasingly being deployed in extreme environments making regular calibration difficult. Conventional hydrophones require calibration to maintain a known performance level, which is then used to calibrate other hydrophones against a known standard. Devices with higher sensitivities need regular calibration, which is not always practical in remote locations.

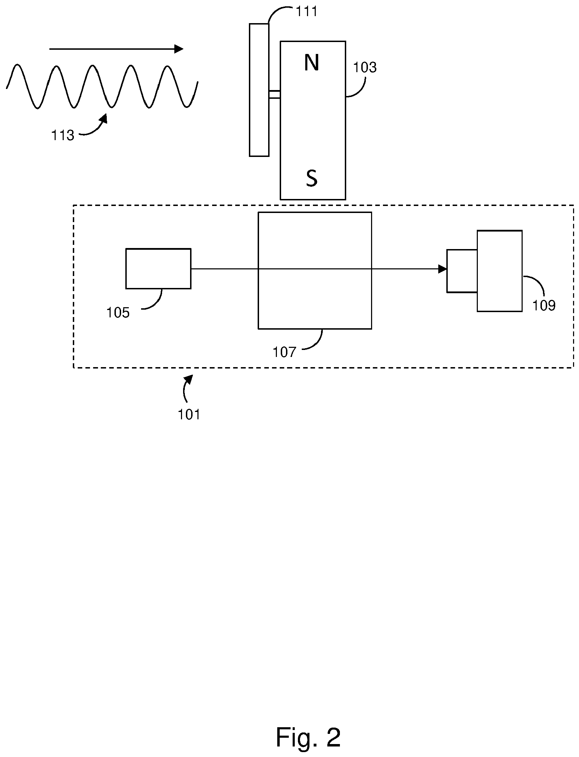

Fig. 2 shows an embodiment of a sensor capable of high sensitivity measurements, without the need for significant calibration. In this embodiment, the sensor comprises a quantum magnetometer 101 and a magnetic element 103. The quantum magnetometer 101 itself comprises a laser 105, a gas cell 107 and a photodetector 109. The gas cell 107 contains caesium or rubidium atoms and a nitrogen buffer (it will be appreciated that other suitable gases may also be used). The atoms present within the gas cell are placed in a known quantum state by shining the laser 105 through the gas cell, with the light passing through the gas cell 107 being detected on the photodetector 109.

The body member 111 is arranged to transmit the force to one or other of the magnetic element 103 and quantum magnetometer 101, so as to stimulate relative motion between the magnetic element 103 and the gas cell 107.

The quantum magnetometer 101 uses quantum effects based on the spin of subatomic particles to determine changes in a magnetic field. In the present case, the subatomic particles include, for example, the nuclei and/or unpaired valence electrons of the atoms in the gas cell 107. Each of these particles has an associated magnetic moment and angular momentum (a spin) that is determined by the quantum state of the particular particle. The overall magnetic moment of the atoms in the gas cell 107 produces a net macroscopic magnetisation known as the ambient magnetic field.

The light from the laser drives an optical transition of the atoms from the ground state to a higher state. After subsequent cycles of excitation/de-excitation, the atomic population is accumulated in a quantum state in which the spin of each particle is aligned along a common axis. This creates a known magnetic quantum state, or spinstate, sensitive to external magnetic fields.

The magnetic element 103 is positioned proximate to the quantum magnetometer 101 such that the particles within the gas cell 107 are exposed to the magnetic field of the magnetic element 103. The magnetic field of the magnetic element 103 disturbs the quantum state of the subatomic particles. In more detail, in the presence of the magnetic field element 103, the particles will precess (i.e. rotate) around the magnetic field of the magnetic element 103 in a plane of precession perpendicular to the direction of that field. The particles precess with an associated angular frequency, the Larmor frequency, which is proportional to the magnitude of the external magnetic field. As the Larmor frequency is a fundamental property of a material, (i.e. atoms in the gas cell), the exploitation of this property means the device does not require calibration.

The magnetic element 103 is coupled to the body member 111, such that motion of the body member 111 will in turn cause the magnetic element to move relative to the gas cell 107. The body member 111 may be caused to move by an external disturbance, such as an acoustic wave 113, a strain, static pressure or other mechanical wave. As the body member moves or vibrates, so too will the magnetic element 103, and the magnetic field surrounding the magnetic element 103 will likewise change or fluctuate at the vibration frequency. The resultant change in the magnetic field will disturb the quantum state of the atoms in the gas cell 107; specifically, the change in the magnetic field will cause the Larmor frequency of the particles to shift to a different frequency. Thus, by detecting a shift in the Larmor frequency, it is possible to infer the presence of the force acting on the body member.

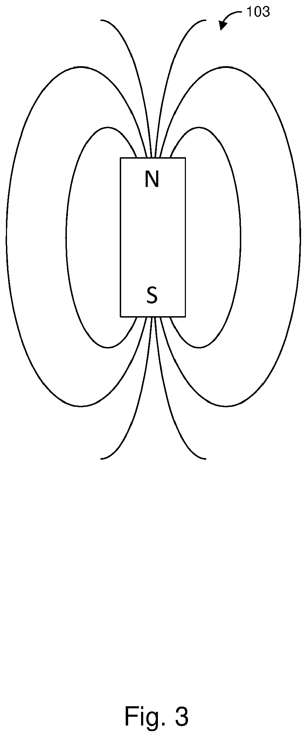

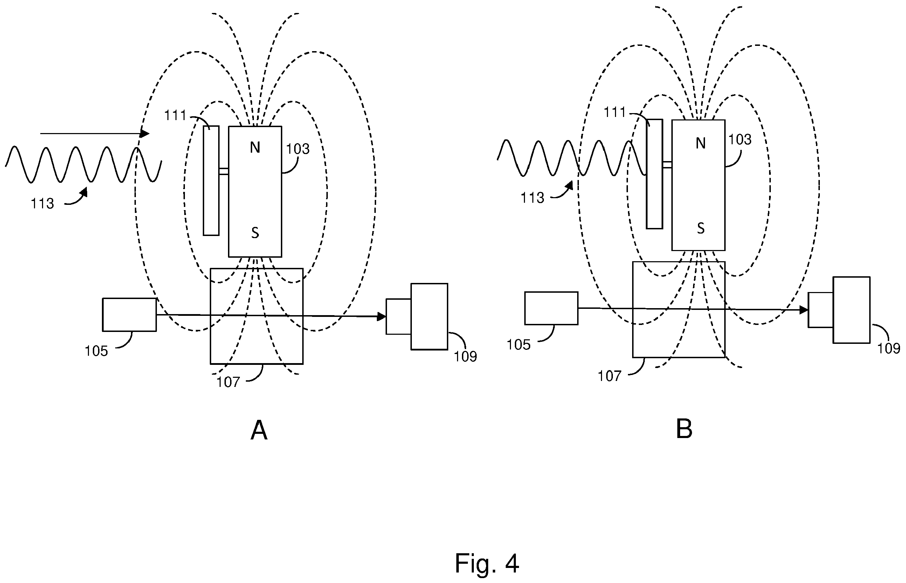

The above process can be further understood by reference to Fig. 3 and 4. Fig. 3 shows an example of a magnetic element 103 as may be used in a sensor according to an embodiment. In this embodiment, the magnetic element 103 comprises a bar magnet with north and south poles located at opposite ends in the longitudinal direction. The magnetic field of the bar magnet 103 is depicted by the magnetic field lines which run from the north pole to the south pole. Fig. 4A shows the bar magnet 103 of Fig. 3 in situ in the sensor. It will be appreciated that, while the bar magnet 103 is shown in Fig. 3 in combination with a quantum magnetometer 101, any suitable magnetometer can be used. Here, the bar magnet 103 is coupled to the body member 111, with the magnetic field lines of the bar magnet 103 passing through the gas cell 107 positioned beneath. In this example, the sensor is used to detect an acoustic wave 113 emitted from a remote source. Fig. 4B shows the sensor after the acoustic wave 113 makes contact with the body member 111. The pressure on the body member 111 from the acoustic wave causes a displacement in the body member 111, which in turn causes the bar magnet 103 to move relative to the gas cell 107. Accordingly, the magnetic field lines are also shifted, meaning that the particles inside the gas cell 107 experience a change in magnetic flux, in turn causing a shift in the Larmor frequency of the particles. The shift in the Larmor frequency of the particles alters the interaction with the light from the laser 105.

By detecting the shift in the Larmor frequency, using the photodetector 109, it is possible to determine that the body member 111 has been displaced and in turn to infer the presence of the acoustic wave 113.

A processing system (not shown) is configured to determine the changes in magnetic field from the light detected at the photodetector 109. The shift in frequency can be detected when it is considered that the amplitude and the polarisation of the laser beam passing through the gas cell 107 will be periodically modulated with the Larmor frequency of the gas atoms in the cell. Thus, a change in the Larmor frequency will translate to a shift in the modulation frequency of the laser beam incident on the photodetector 109. A change in magnetic field could be detected by using a lock-in amplifier to fix the frequency of detection and then sweeping through a range of frequencies when this frequency changes to find the Larmor modulated frequency. The processor translates the changes into an output, for example a position or acceleration of the source of the disturbance. A reader or display system is configured to provide the output to a user. Relying on the quantum effect in this way means that the device will not require calibration and can provide highly precise accurate readings.

It will be appreciated that, in addition to measuring the Larmor frequency in the above described manner, other known methods for detecting a change in the quantum state of a gas may also be used.

The sensitivity of the sensor will be determined in part by the rate of change of the magnetic field, as experienced by the particles in the gas cell 107. The rate of change will depend on the magnetic material used and the strength of its magnetic field, the position of the magnetometer 101 relative to the magnetic element 103, and the degree of freedom of the magnetic element relative to the gas cell 107.

The magnetic element may comprise a ferromagnetic material that will produce an induced magnetic field when another field (for example the Earth's magnetic field) is present. In other embodiments, a solid permanent magnet or an electromagnet may be used. The magnet may also comprise a ferromagnetic fluid or a flexible ferrite/silicone sheet.

A magnetic element 103 having a stronger magnetic field will provide a large change in magnetic field and thus a higher sensitivity. Similarly, positioning the magnetometer 101 proximate to the poles of the magnetic element 103 (where the field gradient is highest) can allow for smaller shifts in the position of the body member 111 to be registered, since even a small shift will translate to a measurable change in the magnetic flux passing through the gas cell 107. In the embodiment shown in Fig. 4, the magnetometer 101 is positioned proximate to the end of the bar magnet 103 where the magnetic field gradient is highest (i.e. the lines of magnetic flux are closest together).

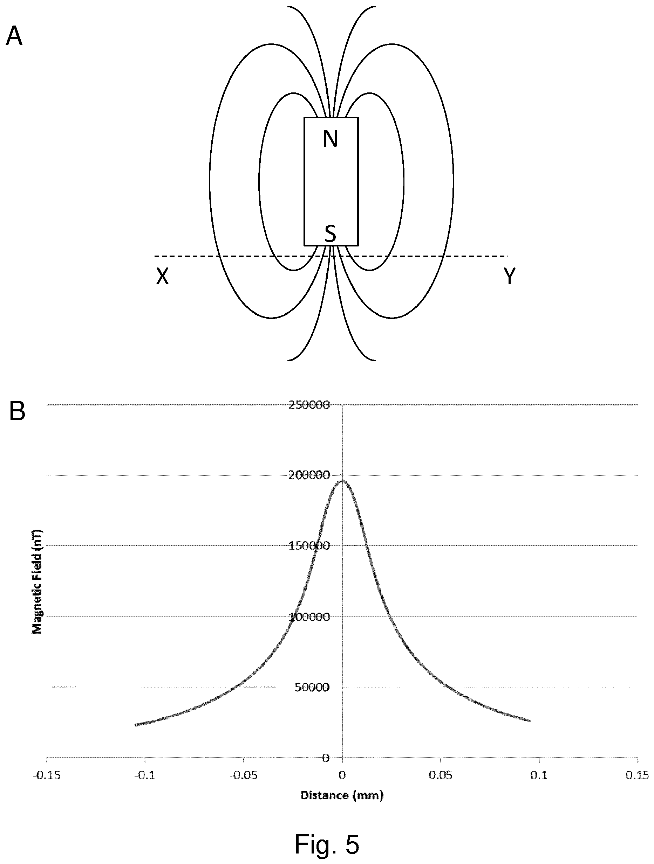

Referring to Fig. 5, Figure 5B shows how the magnetic field strength varies as a function of position along the direction XY shown in Fig. 5A (it will be appreciated that Fig. 5A and 5B are not drawn to the same scale, with the graph of Fig. 5B covering a very small distance range close to the central portion of the line XY shown in Fig. 5A).

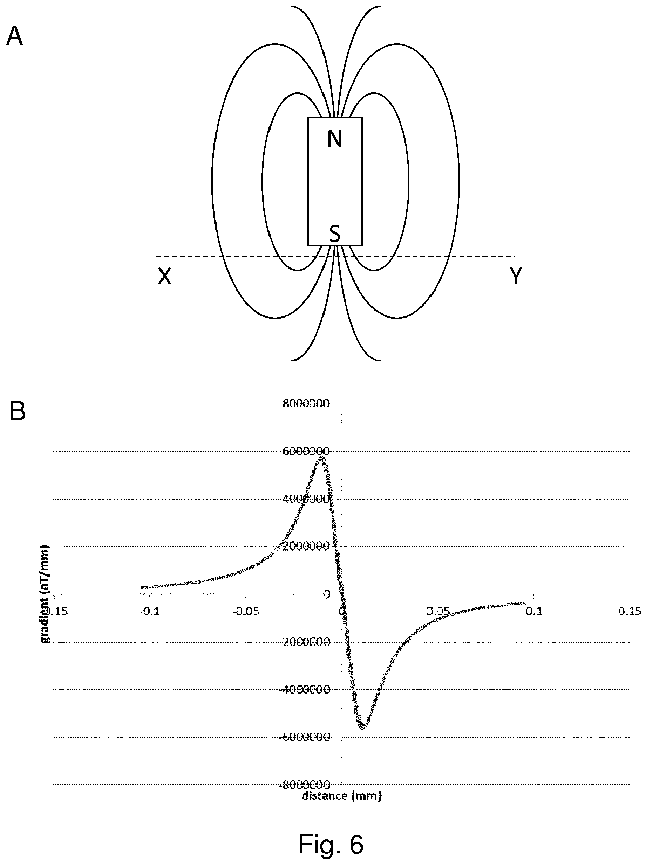

The rate of change of the magnetic field strength along the direction XY is shown in Fig. 6B, again across a small distance range close to the central portion of the line XY shown in Fig. 6A. The gradient is zero at the very centre of the bar magnet 103, but rises sharply on either side. Thus, a small displacement of the bar magnet 103 from its starting position will result in a larger change in the magnetic field within the gas cell 107, and consequently a bigger disturbance in the quantum state of the atoms in the gas cell 107. The person skilled in the art will appreciate that choosing an elongate magnet (i.e. one whose length is greater than its width) can help to accentuate the peak, thereby helping to ensure that even a small displacement in the magnet's position relative to the gas cell 107 will result in a large change in magnetic field at any given point in the cell.

The degree of freedom of the magnetic element 103 relative to the gas cell 107 will be determined by the type of magnetic element 103, how the magnetic element 103 and/or gas cell 107 are mounted and the geometry of the magnetic element 103.

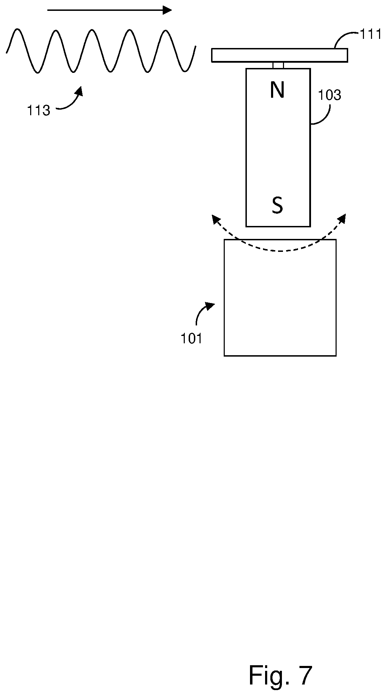

Fig. 7 shows an embodiment in which the magnetic element 103 is fixed at one end to the body member 111 in a cantilever arrangement, such that the magnetic element 103 will swing from the fixed end when a force acts on the body member 111. In an alternative arrangement, the magnetic element 103 may have its end embedded within the body member 111. In this embodiment, the body member 111 may comprise a rigid mechanical fixture that will transmit a force from an external signal, such as an acoustic wave 113, to the magnetic element 103. The swinging motion of the magnetic element 103 (as represented by the dashed arrows) will in turn result in a change in the magnetic field sensed by the magnetometer 101. In the present embodiment, the magnetometer 101 is positioned at the free end of the magnetic element 103 and is not free to move in response to the force acting on the body member 111. Such a configuration may be particularly advantageous for use as an accelerometer, measuring the vibration of the body member 111.

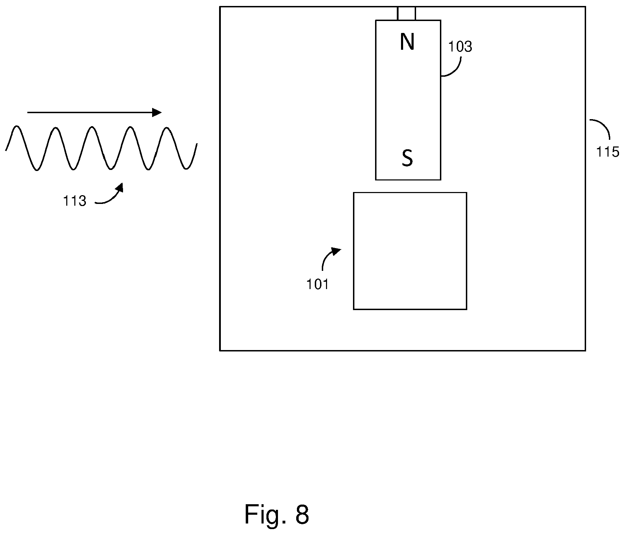

Fig. 8 shows an embodiment in which the sensor comprises a housing 115, inside of which are contained the magnetic element 103 and magnetometer 101. In this embodiment, the body member 111 comprises part of the housing 115; the magnetic element 103 is coupled to the walls of the housing 115, such that impact of a force on the housing 115 (from an incoming acoustic wave 113, for example) will cause the magnetic element 103 to move relative to the magnetometer 101.

It will be appreciated that the impact of the force on the housing 115 may cause one of the magnetic element 103 and the magnetometer 101 to move relative to the other. Precisely which one moves will depend on how the magnetic element 103 and magnetometer 101 are mounted inside the housing 115.

In more detail, in order to provide relative movement between the magnetic element 103 and the housing 115, a first one of the magnetic element 103 and the magnetometer 101 may be rigidly fixed to the walls of the housing 115, whilst the other of the magnetic element 103 and magnetometer 101 is compliantly mounted to the housing 115. The magnetic element 103 or magnetometer 101 may be compliantly mounted through use of a flexible support, such as a foam or rubber support; the flexible support may be such as to allow whichever one of the magnetic element 103 and the magnetometer 101 that is compliantly mounted to the housing 115 to vibrate or oscillate relative to the walls of the housing 115 (and in turn, to vibrate or oscillate relative to the other one of the magnetic element 103 and magnetometer 101 that is rigidly fixed to the walls of the housing 115). In some embodiments, the magnet 103 itself may be flexible and fixed at one end to the housing 115.

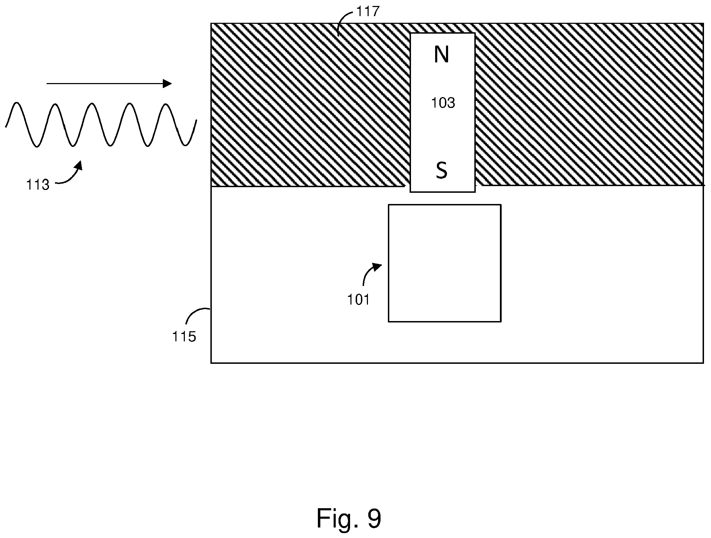

Fig. 9 shows an embodiment in which the magnetic element 103 is formed within a flexible material 117. For example, a bar magnet 103 may be partially or fully embedded within a flexible polymer 117, with the polymer being arranged to bend or flex when subject to a force from the body member 115. In another embodiment, the magnetic element 103 may comprises a set of magnetic particles dispersed in a flexible polymer matrix. The flexible polymer may comprise a polymer foam of PU, silicone, rubber, polymer composite or other suitable flexible polymeric material. The flexible polymer matrix may be formed in any shape.

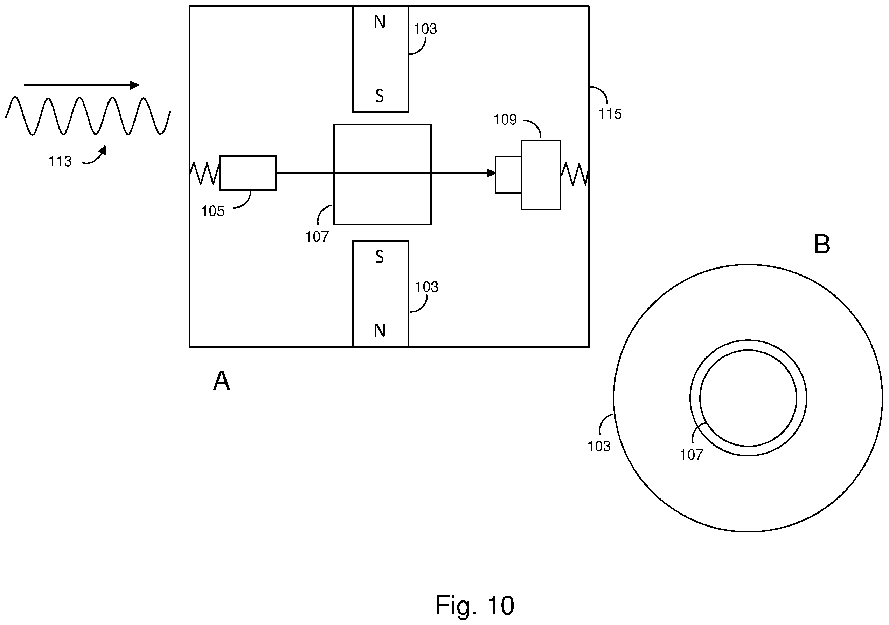

In an embodiment, the magnetic element 103 comprises a radially poled hollow cylindrical magnet that surrounds part or all of the magnetometer 101. This is shown in Fig. 10 wherein the magnetic element 103 comprises a radially poled hollow cylindrical magnet that surrounds the gas cell 107 of the quantum magnetometer 101. The gas cell 107 is positioned substantially axially in the hollow cylindrical magnet 103. Since the magnetic element 103 is radially poled, the magnetic field is strongest at the inner and outer curved surfaces of the hollow cylinder compared to across its thickness. In this embodiment the laser 105 and photodetector 109 are positioned at either side of the cylindrical magnet 103, such that the laser beam travels along the central axis of the cylinder and through the gas cell 107. When used with other types of magnetometer 101, it will be appreciated that that the entire magnetometer 101 may be positioned at the centre of the radially poled hollow cylindrical magnet. As before, the magnet 103 is coupled to the housing 115 such that a force acting on the housing 115 will cause the magnet 103 to move. The magnetometer 101 is compliantly mounted by a flexible fixture to the housing 115 such that when the housing 115 undergoes motion from the external force, the magnetometer 101 and magnet 103 are able to move relative to one another. The housing 115 may be configured to vibrate freely in response to an external disturbance such as a vibration or sound wave 113.

The sensor may be used as a hydrophone, as a receiver in a passive sonar array, as a microphone or as a laboratory standard for calibrating other sensing devices.

While certain embodiments have been described, these embodiments have been presented by way of example only, and are not intended to limit the scope of the inventions. It will be appreciated, for example, that one or other of the magnetic element and the gas cell may experience the force of the acoustic wave of vibration directly; that is, the wave may impact the magnetic element 103 or the gas cell 107 without being conveyed via the body member 111. For example, an end of the magnetic element 103 may be exposed in such a way that waves incident on the sensor will act directly on the magnetic element 103, rather than, or in addition to, the structure to which that element is attached. The poles of the magnetic element 103 may be also be reversed compared to the arrangements shown in the Figures. Where a bar magnet is used as the magnetic element 103, the poles of the magnet may also be through the thickness of the bar (rotated 90 degrees relative to the position shown in figures). Alternatively, other pole configurations are also possible. Multipole magnets may also be used. Although several magnet geometries have been described, it will be understood that the magnet may have a geometry that is substantially beam, rod or cylinder shaped, horse shoe, plate, disc, ring or any suitable geometry. Furthermore, the described embodiments may use an alternative type of known magnetometer 101 to sense the magnetic field fluctuations of the magnetic element 103.

The accompanying claims and their equivalents are intended to cover such forms or modifications as would fall within the scope of the inventions.

## Claims

1. A sensor for sensing an external force acting on the sensor, the sensor comprising:
a magnetic element;
a magnetometer arranged proximate to the magnet and configured to sense a magnetic field associated with the magnetic element;
the magnetic element and the magnetometer being arranged such that exposure of the sensor to the external force will cause a first one of the magnetic element and magnetometer to move relative to the other;
the magnetometer being configured to detect a change in the sensed magnetic field resulting from the relative motion of the magnetic element and the magnetometer, thereby to detect the presence of the force on the sensor.

2. A sensor according to claim 1, wherein the sensor comprises a body member arranged to receive an impact of the external force,
wherein a first one of the magnetic element and the magnetometer are coupled to the body member, such that impact of the force on the body member will cause the first one of the magnetic element and magnetometer to move relative to the other.

3. A sensor according to claim 1 or claim 2 wherein the magnetometer is a quantum magnetometer,
wherein the quantum magnetometer comprises a gas cell containing a gas, wherein the gas is held in a known quantum state;
the magnetic element arranged proximate to the quantum magnetometer, such that relative motion of the magnetic element and the gas cell will disturb the quantum state of the gas;
the magnetic element and the gas cell being arranged such that exposure of the sensor to the external force will cause a first one of the magnetic element and gas cell to move relative to the other;
wherein the quantum magnetometer comprises a detector configured to detect a change in the quantum state of the gas resulting from the relative motion of the magnetic element and gas cell, thereby to detect the presence of the force on the sensor.

4. A sensor according to claim 3, wherein the magnetic element is arranged to disturb the quantum state of the gas by causing a change in the Larmor frequency of particles within the gas.

5. A sensor according to any one of claims 3 to 4, wherein the magnetic element is arranged such that the particles contained within the gas cell are exposed to the region of the magnetic field of the magnetic element that has the highest magnetic flux gradient.

6. A sensor according to any of the preceding claims, wherein the magnetic element comprises a bi-polar magnet and the magnetic element is arranged with one of its poles proximate to the magnetometer.

7. A sensor according to any one of the preceding claims, wherein the magnetic element is fixed to the body member at one end to form a cantilever.

8. A sensor according to any one of the preceding claims, wherein the magnetic element is at least partially embedded in a medium.

9. A sensor according to claim 8, wherein the medium is a flexible medium.

10. A sensor according to claim 8 or 9, wherein the magnetic element comprises a plurality of magnetic particles embedded in the medium.

11. A sensor according to any one of the preceding claims, wherein the magnetic element is arranged to surround all or part of the magnetometer.

12. The sensor of claim 11, wherein the magnetic element is a hollow cylindrical magnet.

13. A sensor according to any one of the preceding claims, comprising a housing in which are contained the magnetic element and magnetometer, wherein at least one of the magnetic element and the magnetometer are mounted within the housing such that exposure of the housing to the external force will cause the first one of the magnetic element and magnetometer to move relative to the other.

14. A sensor according to claim 13, wherein the magnetic element and the gas cell are mounted to the wall(s) of the housing such that motion of the housing will cause the magnetic element and gas cell to move relative to one another.

15. A sensor according to any one of the preceding claims, wherein the sensor is for sensing acoustic waves.

16. A microphone comprising a sensor according to claim 15.

17. A sonar receiver comprising a sensor according to claim 15.

18. An accelerometer comprising a sensor according to any one of claims 1 to 15.
